# EUROPÄISCHE PATENTSCHRIFT

(11) **EP 1 509 403 B1**
(45) Veröffentlichungstag und Bekanntmachung des Hinweises auf die Patenterteilung: **23.01.2008**
(21) Anmeldenummer: 03727221.8
(22) Anmeldetag: 25.04.2003
(51) Int. Cl.: B42D 15/00

(54) **STREIFENFÖRMIGES SICHERHEITSELEMENT**
STRIP-SHAPED SAFEGUARDING ELEMENT
ELEMENT DE SECURITE EN FORME DE BANDE

(30) Priorität: 22.05.2002 DE 10222433
(43) Veröffentlichungstag der Anmeldung: 02.03.2005
(73) Patentinhaber: LEONHARD KURZ Stiftung & Co. KG, 90763 Fürth (DE)
(72) Erfinder: REINHART, Werner, 90513 Zirndorf (DE)
(74) Vertreter: Zinsinger, Norbert
(86) Internationale Anmeldenummer: PCT/DE2003/001344
(87) Internationale Veröffentlichungsnummer: WO 2003/097378

(56) Entgegenhaltungen:
- WO-A-02/00445
- DE-A- 4 334 847
- DE-A- 4 431 531
- DE-A- 10 013 410

## Beschreibung

Die Erfindung betrifft als Transferfolie, insbesondere Heissprägefolie ausgebildete, auf die Oberfläche eines Substrats, insbesondere eines Wertdokumentes, wie Banknote, Scheck, Aktie, Kreditkarte etc., oder eines Ausweises aufbringbare Sicherheitselemente in Form eines Streifens zur Echtheits- oder Qualitätssicherung des Substrats, umfassend wenigstens zwei Kunststoff- oder Lackschichten, zwischen denen mindestens eine, einen in Abhängigkeit vom Beleuchtungs- oder Betrachtungswinkel veränderlichen optischen Effekt erzeugende, optisch wirksame Schicht und/oder Struktur angeordnet ist.

Derartige Sicherheitselemente werden vor allem auf Banknoten, aber auch auf sonstigen, entsprechend hinsichtlich der Qualität oder Originalität zu sichernden Dokumenten, daneben aber auch auf Gegenständen, in zunehmendem Masse verwendet. Beispielsweise tragen die niedrigen EURO-Banknoten (5-, 10- und 20-EURO-Scheine) entsprechende, streifenförmige Sicherheitselemente, bei denen durch eine optisch wirksame Struktur erreicht wird, dass sich das Erscheinungsbild des entsprechenden streifenförmigen Sicherheitselementes in Abhängigkeit vom Beleuchtungs- bzw. Betrachtungswinkel ändert, z.B. zwischen dem "€"-Zeichen und anderen Merkmalen wechselt. Bei den auf den EURO-Banknoten aufgebrachten streifenförmigen Sicherheitselementen handelt es sich um Heissprägefolien, die zumindest eine im allgemeinen thermisch verformbare Schutzlackschicht umfassen, in welche die Struktur mittels eines geeigneten Masters eingeprägt wird. Die Schutzlackschicht ist üblicherweise transparent. Sofern die optische Wirkung der Struktur in Auflicht betrachtet werden soll, wird die Struktur im Rahmen der Prägefolien-Herstellung im allgemeinen mittels einer die Reflexion des Lichtes erhöhenden Schicht, z.B. einer reflektierenden Metallschicht oder einer Schicht mit entsprechend gegenüber dem Brechungsindex der Schutzlackschicht unterschiedlichem Brechungsindex abgedeckt. Auf diese Kombination aus Schutzlackschicht und reflexionserhöhender Schicht wird dann zumindest eine weitere Lackschicht, z.B. eine Klebeschicht, aufgebracht, mittels derer die Heissprägefolie auf dem Substrat festgelegt werden kann. Auf eine separate Kleberschicht kann verzichtet werden, wenn entweder eine auch klebende Eigenschaften aufweisende Lackschicht verwendet wird oder der Kleber vor Aufbringung der die Struktur aufweisenden Schicht auf das Substrat aufgebracht wird. Im Hinblick auf die vorstehend angesprochenen diversen Möglichkeiten ist somit davon auszugehen, dass unter "Kunststoff- oder Lackschicht" im Sinne der Erfindung nicht nur derartige Schichten im strengen Sinn sondern beispielsweise auch Folien, Kleberschichten etc. zu verstehen sind.

Ein in Abhängigkeit vom Beleuchtungs- oder Betrachtungswinkel veränderlicher optischer Effekt kann auf unterschiedlichste Arten erzeugt werden. So ist es z.B. bekannt, durch Verwendung entsprechender Gitterstrukturen Bewegungseffekte zu erzielten, was beispielsweise in der EP 0 105 099 B1 erläutert ist. Eine andere Möglichkeit besteht darin, die optisch wirksame Struktur so auszubilden, dass der Betrachter in Abhängigkeit vom Beleuchtungs- bzw. Betrachtungswinkel unterschiedliche Bilder erkennen kann, wie dies bei sämtlichen EURO-Banknoten der Fall ist. Wie dieser Effekt im einzelnen erzielt werden kann, lässt sich z.B. der EP 0 375 833 B1 entnehmen. Weiterhin ist es bekannt, einen entsprechend veränderlichen optischen Effekt mittels holographischer Massnahmen zu erzielen, wobei neuerdings derartige holographische Effekte im allgemeinen auch über entsprechend gestaltete räumliche Strukturen einer Trennschicht zwischen zwei Kunststoff- bzw. Lackschichten erreicht werden.

Eine weitere Möglichkeit zur Erzielung eines in Abhängigkeit vom Beleuchtungs- oder Betrachtungswinkel sich ändernden optischen Erscheinungsbildes ist z.B. in der WO 01/03845 A1 erläutert. Dort wird nämlich beschrieben, dass sich insbesondere Farbwechsel durch den Einsatz spezifischer Interferenz-Schichtfolgen oder aber auch durch Benutzung spezifischer Druckfarben mit Interferenz-Pigmenten erzielen lassen.

Neben den vorstehend erläuterten streifenförmigen Sicherheitselementen gibt es auch eine Vielzahl von Einsatzgebieten, wo Sicherheitselemente in Form von abgegrenzten Bereichen bevorzugt sind. Dies gilt insbesondere dann, wenn eine graphische Einbeziehung des Sicherheitselementes in die Oberflächengestaltung des Substrats angestrebt wird. Ausserdem erwecken Gestaltungen, bei denen das optisch variable Sicherheitselement nur in bestimmten, eng begrenzten Bereichen vorgesehen ist, einen höherwertigen Eindruck. In diesem Zusammenhang sei auf die höheren Denominationen der EURO-Banknoten (EURO 50, 100, 200 und 500) verwiesen, bei denen jeweils ein optisch veränderliches Sicherheitselement in Form eines räumlich begrenzten Flächenbereiches vorhanden ist.

Die Herstellung entsprechender Sicherheitselemente erfolgt im allgemeinen über die Beschichtung von Kunststoff-Folien als Trägerbahnen. Diese Bahnen werden dann in Streifen geschnitten, von denen ausgehend dann eine entsprechende Übertragung der Sicherheitselemente auf das Substrat erfolgt.

Wenn das Sicherheitselement nun streifenförmig ist, bereitet diese Übertragung keine Schwierigkeiten. Es kann im allgemeinen mittels Andruckwalzen geeigneter Breite gearbeitet werden, wobei die die Sicherheitselemente aufweisenden Folienbahnen vor der Applikation auf das Substrat in Streifen geschnitten werden, deren Breite der gewünschten Breite des Sicherheitselement-Streifens entspricht.

Auch bei der Aufbringung von Sicherheitselementen, die nur bestimmte Flächenbereiche auf dem Substrat abdecken sollen, muss mit streifenförmigen Folien gearbeitet werden. In diesem Falle ist es jedoch erforderlich, zusätzliche Mittel vorzusehen, die bewirken, dass von einem entsprechenden Folienbahn-Streifen nur jeweils der entsprechende Flächenbereich auf das Substrat appliziert wird. Bei der Verwendung von von Heissprägefolien gebildeten Sicherheitselementen besteht einerseits die Möglichkeit, Andruckwerkzeuge, z.B. Andruckwalzen zu verwenden, die mit erhabenen, jeweils dem zu übertragenden Flächenbereich entsprechend geformten Andruckelementen versehen sind. Die Herstellung solcher Andruckwalzen ist verständlicherweise erheblich kostspieliger als die von Walzen mit glatter Oberfläche.

Aus diesem Grunde hat man auch bereits vorgeschlagen (sh. DE 35 11 146 A1), Prägefolien ohne eigene Klebeschicht zu verwenden und vor der Übertragung des entsprechenden Sicherheitselements von der Heissprägefolie auf das Substrat auf dem Substrat Kleber in den das Sicherheitselement aufnehmenden Flächenbereichen vorzusehen. Diese Vorgehensweise bietet den Vorteil, dass während des eigentlichen Übertragungsvorganges mit glatten Prägewalzen oder Prägerädern gearbeitet werden kann. Es muss jedoch in einem vorhergehenden Druckvorgang das Substrat mit Kleber in dem gewünschten Bereich versehen werden, was einen zusätzlichen Arbeitsgang und den Einsatz entsprechender Druckformen bedingt.

Es wurde auch bereits vorgeschlagen (sh. DE 198 13 314 A1) die vom Trägerfilm ablösbare, das Sicherheitselement aufweisende Schichtfolge einer Prägefolie in entsprechende einzelne, voneinander getrennte Flächenbereiche zu unterteilen, wobei dann auch die Kleberschicht nur in diesen Bereichen vorgesehen ist. Die Verwendung einer derartigen Heissprägefolie zur Aufbringung der Sicherheitselemente in vorbestimmten Flächenbereichen auf das Substrat gestattet ebenfalls die Verwendung glatter Prägewalzen. Die Herstellung solcher Heissprägefolien ist jedoch vergleichsweise kompliziert.

Sämtlichen bekannten Verfahren zur Aufbringung von Sicherheitselementen auf Substrate in Form von begrenzten Flächenbereichen ist darüberhinaus der Mangel gemeinsam, dass üblicherweise auf dem Substrat, beispielsweise einem Bogen mit etlichen Banknoten, die einzelnen Sicherheitselement-Flächenbereiche in vergleichsweise grossem Abstand angeordnet sind. Dies bedeutet bei Übertragung der Sicherheitselemente von einem Streifen entweder einen vergleichsweise grossen Abfall oder bedingt die Verwendung besonderer Massnahmen, die es gestatten, ein und denselben Ausgangsstreifen mit Sicherheitselementen mehrfach, jedoch entsprechend versetzt, über das Substrat zu führen und so bei einem zweiten oder dritten Gang über das Substrat die jeweils zwischen übertragenen Flächenbereichen verbleibenden Bereiche entsprechend strukturierten oder anderweitig optisch veränderlich ausgebildeten Materials zur Erzeugung weiterer Sicherheitselement-Flächenbereiche auszunutzen. Eine entsprechende Vorrichtung ist in der DE 42 42 105 A1 beschrieben.

Aus der DE 43 34 847 A1 ist ein Wertdokument mit einem Fenster bekannt, bei dem das Fenster mittels eines sich über die Breite des Wertdokumentes erstreckenden, an der Oberfläche des Wertdokumentes befestigten Streifens einer Laminierfolie abgedeckt ist. Dieser Laminierfolien-Streifen umfasst einen Trägerfilm, auf dem zwei Lackschichten vorhanden sind, zwischen denen in zwei definiert begrenzten Flächenbereichen eine optisch wirksame Struktur angeordnet ist. Der eine Flächenbereich ist dabei innerhalb des Fensters vorgesehen, während der andere Flächenbereich über dem Substrat des Wertdokumentes angeordnet ist. Die den Streifen bildende Laminierfolie ist in einer Vertiefung der Oberfläche des Substrates angeordnet, die zweckmässig durch entsprechend hohe Druckeinwirkung auf die Laminierfolie beim Aufbringen des Streifens erzeugt wird. Bei dem bekannten Wertdokument muss unbedingt eine Laminierfolie verwendet werden, weil nur diese hinreichend stabil ist, um einerseits das Fenster zuverlässig abzudecken und andererseits durch die hohen Kräfte beim Aufbringen des Streifens nicht beschädigt zu werden. Es besteht jedoch für den Fachmann keine Veranlassung, einen entsprechenden Streifen zu verwenden, wenn kein Fenster abzudecken ist, zumal durch die Ausbildung einer Vertiefung im allgemeinen das Substrat in einer meist unerwünschten Weise verändert wird.

Unter Berücksichtigung der vorstehend aufgezeigten Probleme liegt somit der Erfindung die Aufgabe zugrunde, ein Sicherheitselement zu schaffen, welches einerseits leicht und günstig herstellbar und aufbringbar ist, andererseits jedoch die Vorzüge und Eigenschaften von auf einen vorbestimmten Flächenbereich begrenzten Sicherheitselementen bietet.

Ein anderes Wertdokument ist aus DE 100 13 410 A1 bekannt.

Zur Lösung dieser Aufgabe wird erfindungsgemäss vorgeschlagen, ein gattungsgemässes Sicherheitselement in Form eines Streifens derart auszubilden, dass die optisch wirksame Schicht und/oder Struktur nur in wenigstens zwei definiert begrenzten, voneinander beabstandeten, visuell veränderlichen Flächenbereichen angeordnet ist, während der Streifen ausserhalb der visuell veränderlichen Flächenbereiche transparent und/oder nicht in Abhängigkeit vom Beleuchtungs- oder Betrachtungswinkel optisch veränderlich und/oder an das Erscheinungsbild der Oberfläche des den Streifen im Gebrauch aufnehmenden Substrats angepasst ist.

Die Erfindung geht somit von der Überlegung aus, dass einerseits die Vorteile einer Streifen-Aufbringung mittels einer Transferfolie, insbesondere Heissprägefolie, erhalten bleiben sollen, andererseits jedoch trotz Aufbringung eines streifenförmigen Elementes das Erscheinungsbild eines flächenmässig begrenzten Sicherheitselementes erreicht wird. Hierzu wird nun gemäss der Erfindung - im Gegensatz zum bisherigen Vorgehen bei Transferfolien - nicht vorgeschlagen, nur in dem visuell veränderlichen Flächenbereich eine entsprechende Applikation von Kunststoff- oder Lackschichten vorzunehmen, sondern eine streifenförmige Applikation, wobei jedoch der Streifen so ausgebildet ist, dass der angestrebte Effekt einer visuellen Veränderung für den Betrachter in Abhängigkeit vom Beleuchtungs- oder Betrachtungswinkel tatsächlich nur in begrenzten Flächenbereichen vorhanden ist. Zu diesem Zweck wird die Ausbildung des Sicherheitselementes so gewählt, dass nur in den veränderlichen Flächenbereichen eine optisch wirksame Struktur oder Schicht, ggf. auch eine Kombination aus optisch wirksamer Struktur und Schicht, angeordnet ist, währen der restliche Bereich des Sicherheitselement-Streifens so gestaltet ist, dass er vom Betrachter nicht oder kaum von der Oberfläche des Substrats unterschieden werden kann, was sich beispielsweise dadurch erreichen lässt, dass der das Sicherheitselement bildende Streifen ausserhalb der optisch veränderlichen Flächenbereiche transparent ist, so dass die Oberfläche des Substrats entsprechend durchscheint. Eine andere Möglichkeit ist die, den Streifen ausserhalb der veränderlichen Flächenbereiche an die Oberfläche des Substrats optisch anzupassen. Unter Umständen genügt es aber auch bereits, um den angestrebten Effekt "visuelle Änderung nur in definiertem Flächenbereich" zu erreichen, wenn der Streifen ausserhalb dieser visuell veränderlichen Flächenbereiche so ausgebildet ist, dass sich sein Erscheinungsbild abhängig vom Beleuchtungs- und Betrachtungswinkel nicht ändert, was z.B. durch eine entsprechende Aufrauhung, Mattierung etc. erreicht werden kann.

Bei Verwendung eines Sicherheitselements gemäss der Erfindung kann die Aufbringung ebenfalls in der von streifenförmigen Sicherheitselementen mit über die gesamte Streifenlänge vorhandenen, optisch variablen Strukturen bekannten Weise erfolgen. Trotzdem erhält man ein Erscheinungsbild des mit dem Sicherheitselement versehenen Substrats, das weitgehend dem Erscheinungsbild entspricht, welches sich erzielen lässt, wenn ein Sicherheitselement nur in bestimmten Flächenbereichen, dann jedoch mit den bekannten besonderen Vorkehrungen oder Problemen, aufgebracht ist. Insbesondere kann auch bei Streifen-Applikation Sorge dafür getragen werden, dass die entsprechend veränderlichen Flächenbereiche sich genau an der vorgesehenen Stelle befinden, d.h. beispielsweise im Register mit dem Druck des Substrats. Die Verwendung eines als Transferfolie ausgebildeten Streifens bietet gegenüber einem Laminierfolien-Streifen vor allem den Vorteil geringer Dicke der nach der Aufbringung auf dem Substrat verbleibenden Lack- bzw. Kunststoffschichten sowie der daraus resultierenden Möglichkeit, mit vergleichsweise geringem Anpressdruck zu arbeiten, so dass das Substrat nicht geschädigt wird.

Grundsätzlich bestehen auch bei dem Sicherheitselement gemäss der Erfindung sämtliche bekannten Möglichkeiten für die Erzeugung des in Abhängigkeit vom Beleuchtungs- oder Betrachtungswinkel veränderlichen optischen Effektes.

Hier ist z.B. vorgesehen, dass die optische wirksame Schicht von einer bei Veränderung des Beleuchtungs- oder Betrachtungswinkels einen Farbwechsel erzeugenden Interferenz-Schichtfolge (aus einer Mehrzahl von dünnen Schichten) gebildet ist, wobei zweckmässig die Interferenz-Schichtfolge wenigstens eine teiltransparente Absorptionsschicht sowie mindestens eine transparente, dielektrische Abstandsschicht aufweist. Derartige Interfenz-Schichtfolgen sind z.B. in der WO 01/03945 A1 beschrieben.

Daneben ist es natürlich auch möglich, dass als optisch wirksame Struktur eine beugungsoptisch wirksame Struktur, insbesondere eine Gitterstruktur, vorgesehen ist. Derartige Strukturen sind, wie bereits erwähnt, aus EP 0 105 099 B1 und EP 0 375 833 B1 bekannt.

Bei Aufbringung auf ein Substrat werden optisch aktive Sicherheitselemente meist in Auflicht betrachtet. Hierbei ist es günstig, wenn die in Beobachtungsrichtung vor der optisch wirksamen Schicht oder Struktur liegende Kunststoff- oder Lackschicht transparent ist, während in Beobachtungsrichtung hinter der optisch wirksamen Schicht oder Struktur eine reflexionserhöhende Schicht angeordnet ist.

Die reflexionserhöhende Schicht ist im allgemeinen eine reflektierende Metallschicht.

Es kann für bestimmte Anwendungsgebiete jedoch auch günstig sein, wenn die reflexionserhöhende Schicht in an sich bekannter Weise eine transparente Kunststoff- oder Lackschicht ist, deren Brechungsindex sich deutlich, vorzugsweise um wenigstens 0,2, vom Brechungsindex der in Beobachtungsrichtung davorliegenden Schicht unterscheidet. Eine derartige Anordnung wird beispielsweise dann verwendet, wenn Sicherheitselemente gemäss der Erfindung auf Identifikationskarten od. dgl. eingesetzt werden sollen, bei denen unter dem Sicherheitselement irgendwelche Informationen, z.B. Bilder, alphanumerische Zeichen etc. vorhanden sind.

Eine unauffällige Anbringung des streifenförmigen Sicherheitselementes gemäss der Erfindung lässt sich erreichen, wenn der Streifen ausserhalb der visuell veränderlichen Flächenbereiche mit einer - vorzugsweise der Musterung der den Streifen aufnehmenden Oberfläche des Substrats entsprechenden - Musterung versehen ist. Wenn diese Musterung ebenfalls zwischen den zwei Kunststoff- oder Lackschichten angeordnet ist, erreicht man eine besonders gute Abriebfestigkeit und Stabilität des Sicherheitselementes.

Die Musterung des Streifens ausserhalb der visuell veränderlichen Flächenbereiche lässt sich auf unterschiedlichste Art und Weise, beispielsweise durch Aufrauhung, erreichen. Besonders günstig ist es jedoch, wenn die Musterung gedruckt ist, wobei sich eine besonders gute Übereinstimmung der Musterung auf dem Streifen mit der Musterung des Substrats dann erreichen lässt, wenn die Musterung nach der Aufbringung des das Sicherheitselement bildenden Streifens auf das Substrat aufgebracht ist, vorzugsweise derart, dass die Musterung gleichzeitig auf den Streifen und die den Streifen tragende Oberfläche des Substrats aufgebracht ist, wobei die Musterung wenigstens einen Rand des Streifens übergreifend auf dem Streifen und der Oberfläche des Substrats durchgehend gestaltet ist. Bei einer derartigen Überdruckung des Streifens erreicht man nicht nur eine einwandfreie Anpassung des Erscheinungsbildes der Streifenoberfläche einerseits und der Oberfläche des Substrats andererseits. Es wird vielmehr eine zusätzliche Sicherung gegen Fälschung erreicht, weil es auf diese Weise praktisch unmöglich ist, einen vorhandenen Streifen durch einen neuen Streifen zu ersetzen, wobei es ohnehin schwer ist, die dünnen Lack- oder Kunststoffschichten des Sicherheitselementes nach der Aufbringung auf das Substrat zu ersetzen.

Besonders leicht erkennbare Effekte im Sinne der Sicherung lassen sich erzielen, wenn die visuell veränderlichen Flächenbereiche die Form eines einfachen geometrischen Elements, z.B. eines Vielecks, aufweisen. Die Flächenbereiche können aber auch andere, einfache geometrische Formen, z.B. einprägsame Figuren etc., besitzen.

In diesem Zusammenhang kann es günstig sein, wenn zumindest zwei der visuell veränderlichen Flächenbereiche eine unterschiedliche geometrische Form aufweisen, um so einen speziellen optischen Eindruck zu erzielen.

Besonders leicht lässt sich das Erscheinungsbild für den Laien einprägen, wenn mindestens ein visuell veränderlicher Flächenbereich die Form eines alphanumerischen Zeichens aufweist, wobei die Einprägsamkeit und Funktion des Sicherheitselementes noch dadurch verbessert werden kann, wenn - wie ebenfalls vorgesehenen - mehrere visuell veränderliche Flächenbereiche in Form alphanumerischer Zeichen vorgesehen sind, die gemeinsam einen Begriff darstellen. Beispielsweise könnte dieser Begriff die Denomination oder Währung einer Banknote, einen Hinweis auf die Gültigkeit (z.B. das Wort "VALID") oder den Namen des Herausgebers des entsprechenden Wertdokuments od. dgl. darstellen.

Die Aufbringung der Sicherheitselemente auf Substrate ist besonders einfach, da die Sicherheitselemente als Transferfolie, insbesondere Heissprägefolie, ausgebildet sind. Eine Transferfolie, insbesondere Heissprägefolie, zeichnet sich dabei dadurch aus, dass das eigentliche Sicherheitselement von einer auf einem Trägerfilm angeordneten Schichtfolge gebildet ist, wobei diese Schichtfolge unter Einwirkung von Druck und/oder Wärme auf das Substrat übertragen und nach Aufbringung der Schichtfolge auf das Substrat der Trägerfilm wieder abgelöst wird.

Gegenstand der Erfindung ist schliesslich ein Wertdokument mit einem streifenförmigen, erfindungsgemäss ausgebildeten Sicherheitselement, wobei das Sicherheitselement derart aufgebracht ist, dass die visuell veränderlichen Flächenbereiche und/oder die Musterung mit Druck- oder sonstigen Gestaltungselementen auf der Oberfläche des Wertdokumentes im Register angeordnet sind.

Nachstehend werden Ausführungsbeispiele der Erfindung anhand der Zeichnung näher erläutert.

Es zeigen -:
- Figur 1: schematisch eine mit einem erfindungsgemässen Sicherheitselement versehene Kreditkarte;
- Figur 2: ein mit einem Sicherheitselement nach der Erfindung versehenes Wertdokument, z.B. Scheck, Aktie od. dgl., und
- Figuren 3 und 4: jeweils Schnitte gemäss III-III bzw. IV-IV in Figur 1, wobei weder die Abmessungen noch die Dicken der einzelnen Schichten massstabgetreu gezeigt und die jeweilige Schichtfolge stark vereinfacht dargestellt ist.

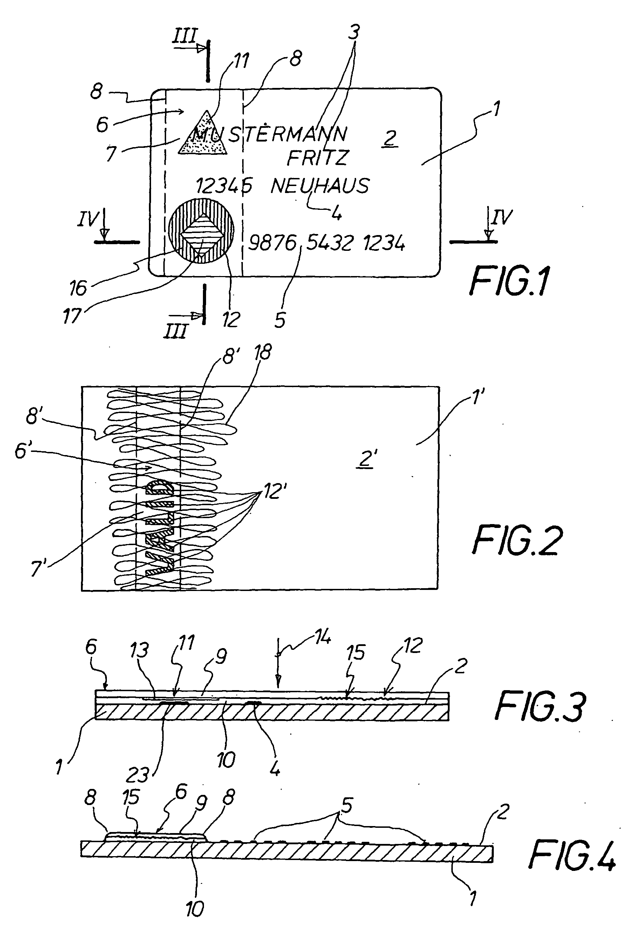

Die Kreditkarte gemäss Figur 1 umfasst in an sich bekannter Weise einen z.B. von einem Kunststoff-Plättchen entsprechender Dicke gebildeten Träger 1. Dieser Träger 1 kann an seiner Oberfläche insgesamt mit einem dekorativen Muster versehen sein, welches auf den jeweiligen Herausgeber der Kreditkarte hinweist. Ausserdem trägt die Kreditkarte auf ihrer Vorderseite zwei Angaben zum Inhaber, z.B. dessen Namen 3 sowie Wohnsitz 4. Diese Angaben können in an sich von Kreditkarten od. dgl. her bekannter Weise aufgebracht, z.B. aufgedruckt oder in den Träger 1 eingeprägt sein. Gleiches gilt für eine ebenfalls auf der Vorderseite 2 der Kreditkarte vorhandene Ordnungsnummer 5.

Um eine Fälschung der Kreditkarte möglichst zu verhindern, ist diese mit einem Sicherheitselement 6 in Form eines aufgeprägten Streifens 7 versehen, wobei der Rand 8 des Streifens 7 in Figur 1 durch gestrichelte Linien angedeutet ist.

Bei dem dargestellten Ausführungsbeispiel ist der Sicherheitsstreifen 6 von der Übertragungslage einer Heissprägefolie gebildet. Diese Übertragungslage umfasst, wie aus den Figuren 3 und 4 hervorgeht, wenigstens eine Schutzlackschicht 9 sowie eine Klebeschicht 10.

Bekanntlich bestehen Heissprägefolien üblicherweise aus einem Trägerfilm, auf dem eine aus einer oder mehreren Kunststoff- bzw. Lack- oder Klebeschichten zusammengesetzte Übertragungslage angeordnet ist. Bei der Verarbeitung wird dann die Heissprägefolie mit der Klebeschicht, die vom Trägerfilm abgekehrt ist, auf das Substrat aufgelegt und durch Einwirkung von Wärme und ggf. Druck der Kleber erweicht, wodurch die Übertragungslage an dem Substrat haftet. Um den Trägerfilm ohne weiteres abziehen zu können, ist es üblich, zwischen Übertragungslage und Trägerfilm eine Ablöseschicht, im allgemeinen eine wachsähnliche Schicht, vorzusehen, die bei Einwirkung von Wärme zwecks Erweichung des Klebers ebenfalls erweicht und so eine Trennung von Trägerfilm und Übertragungslage gestattet.

Die Besonderheit des Sicherheitselements 6 gemäss Figur 1 besteht nun darin, dass es in zwei definiert begrenzten und voneinander unabhängigen Flächenbereichen 11 bzw. 12 so aufgebaut ist, dass ein in Abhängigkeit vom Beleuchtungs- oder Betrachtungswinkel veränderlicher optischer Effekt erzeugt wird.

In dem Flächenbereich 11 befindet sich beim gezeigten Ausführungsbeispiel eine aus einer Mehrzahl von dünnen Schichten bestehende Interferenz-Schichtfolge 13, wobei aus Gründen der Klarheit auf die Darstellung der einzelnen Schichten in Figur 3 verzichtet wurde. Der bei Vorhandensein einer entsprechenden Interferenz-Schichtfolge erzielbare optische Effekt besteht darin, dass sich bei Veränderung des Beleuchtungs- oder Betrachtungswinkels ein Farbwechsel ergibt, wobei der Farbwechsel von der Dicke der einzelnen Schichten sowie der Wellenlänge des zur Betrachtung verwendeten Lichtes abhängig ist. Bezüglich Einzelheiten entsprechender Interferenz-Schichtfolgen kann auf die WO 01/03945 A1 verwiesen werden.

Wie Figur 1 in Kombination mit Figur 3 erkennen lässt, befindet sich in Betrachtungsrichtung 14 hinter der Interferenz-Schichtfolge 13 im dargestellten Ausführungsbeispiel der gesamte Buchstabe "M" sowie ein Teil des Buchstabens "U" des Namens 3 des Karteninhabers, was in Figur 3 durch die Druckschicht 23 angedeutet ist. Um diese Druckschicht 23 als Teil des Namens 3 erkennen zu können, ist beim gezeigten Ausführungsbeispiel die Interferenz-Schichtfolge insgesamt transparent, wobei allerdings trotzdem zur Verstärkung des Farbwechsel-Effektes auf der zum Träger 1 der Karte weisenden Seite der Interferenz-Schichtfolge 13 eine transparente, reflexionserhöhende Beschichtung vorhanden sein kann.

Der Flächenbereich 12 der Karte gemäss Figur 1 ist mit einem weiteren in Abhängigkeit vom Betrachtungs- bzw. Beleuchtungswinkel unterschiedliche Effekte ergebenden Element versehen, nämlich mit einer beugungsoptisch wirksamen Struktur 15, vorzugsweise einer Gitterstruktur oder einem Hologramm. In Figur 1 ist nun schematisch angedeutet, dass die beugungsoptisch wirksame Struktur 14 des Flächenbereiches 12 zwei Teilbereiche 16 bzw. 17 aufweist, die sich dadurch voneinander unterscheiden, dass die jeweiligen Gitterparameter (Gitterfrequenz, Azimutwinkel, Flankensteilheit etc.) unterschiedlich sind. Wenn man beispielsweise, wie in Figur 1 angedeutet, die Gitterstrukturen nur insoweit unterschiedlich gestaltet, dass sich die Gitter der verschiedenen Bereiche 16 und 17 lediglich im Azimutwinkel (beim gezeigten Ausführungsbeispiel um 90°) unterscheiden, erreicht man bereits einen deutlich wahrnehmbaren optischen Effekt, indem nämlich bei Betrachtung von der Breitseite der Karte her beispielsweise lediglich das Quadrat (Bereich 17) sichtbar ist, während bei Betrachtung von der Schmalseite her, d.h. bei Drehung der Karte um 90°, nur noch der das Quadrat umgebende Bereich 16 in Erscheinung tritt. Selbstverständlich kann die beugungsoptisch wirksame Struktur des Flächenbereiches 12 auch so ausgebildet sein, dass wesentlich kompliziertere Effekte erzeugt werden, wie sie z.B. in der EP 0 105 099 B1 oder der EP 0 375 833 B1 beschrieben sind.

Die Figur 3 zeigt nun, dass die Interferenz-Schichtfolge 13 im Flächenbereich 11 sowie die beugungsoptisch wirksame Struktur 15 im Flächenbereich 12 jeweils zwischen zwei Schichten, nämlich beim gezeigten Ausführungsbeispiel der Schutzlackschicht 9 und der Klebeschicht 10, angeordnet sind, was insbesondere wegen eines sicheren Schutzes der Flächenbereiche 11, 12 gegen Veränderungen zweckmässig ist.

Das wesentliche Charakteristikum des Sicherheitselements 6 gemäss der Erfindung ist nun darin zu sehen, dass tatsächlich nur die Flächenbereiche 11 bzw. 12 einen vom Beleuchtungs- bzw. Betrachtungswinkel abhängigen optischen Variationseffekt zeigen, während der Rest des Streifens 7 so ausgebildet ist, dass er gegenüber der Oberfläche 2 der Karte oder eines sonstigen Substrats nicht in Erscheinung tritt.

Dies wird bei dem Ausführungsbeispiel gemäss den Figuren 1, 3 und 4 in einfacher Weise dadurch erreicht, dass die beiden Schichten 9, 10 jeweils glasklar durchsichtig sind, so dass der Streifen 7 ausserhalb der Flächenbereiche 11, 12 nach dem Aufbringen auf die Oberfläche 2 des Trägers 1 optisch überhaupt nicht mehr in Erscheinung tritt, weil für den Betrachter nur die Gestaltung der Vorderseite 2 der Karte sichtbar ist, wobei hier der Umstand, dass der Streifen 7 auf der Oberfläche 2 nur aus den beiden Schichten 9, 10 besteht, die Sichtbarkeit weiter reduziert.

Es bestehen natürlich auch andere Möglichkeiten, die ausserhalb der Flächenbereiche liegende Oberfläche des Streifens 7 zu "kaschieren". Hierzu genügt es häufig bereits, wenn der Streifen ausserhalb der visuell veränderlichen Flächenbereiche 11, 12 so ausgebildet ist, dass er sich in Abhängigkeit vom Beleuchtungs- oder Betrachtungswinkel optisch nicht verändert, was beispielsweise durch entsprechend matte Gestaltung des Streifens erreicht werden kann. Eine besonders zweckmässige Möglichkeit des Kaschierens besteht jedoch darin, dass der Streifen 7 ausserhalb der veränderlichen Flächenbereiche 11, 12 an das Erscheinungsbild der Oberfläche 2 des Substrats, beispielsweise der Karte, angepasst ist.

Eine derartige Ausführungsform ist in Figur 2 dargestellt.

Dort ist ein Sicherheitselement 6' ebenfalls von einem Streifen 7' gebildet, dessen Ränder 8' ebenfalls durch gestrichelte Linien angedeutet sind.

Der Streifen 7' trägt im Ausführungsbeispiel der Figur 2 fünf Flächenbereiche 12', die beispielsweise von einer beugungsoptisch wirksamen Gitterstruktur gebildet werden. Die fünf Flächenbereiche 12' sind ähnlich einem Siegel od. dgl. räumlich relativ eng benachbart und haben jeweils die Umrissform der Buchstaben "V", "A", "L", "I" und "D", so dass dann, wenn die beugungsoptisch wirksame Struktur in den Flächenbereichen 12' für den Betrachter sichtbar ist, das Wort "VALID" gebildet wird.

Bei dem Ausführungsbeispiel der Figur 2 ist nun der Streifen 7' dadurch an die Oberfläche 2' des Trägers 1', beispielsweise eines Scheckformulars od. dgl., angepasst, dass der Streifen 7' eine der Musterung der Oberfläche 2' des Substrats 1' entsprechende Musterung 18 trägt, wobei die Musterung bei dem Ausführungsbeispiel in Form von guillochenartigen Schleifen dargestellt ist.

Nachdem es grundsätzlich möglich ist, die die Sicherheitselemente 7' bildenden Streifen 6' genau passerhaltig auf die Oberfläche 2' des Trägers 1' aufzubringen, ist es möglich, den Streifen ausserhalb der Flächenbereiche 12' bereits bei seiner Herstellung ebenfalls entsprechend zu mustern, was z.B. in einem Druckverfahren erfolgen kann, wobei dann die Druckschicht aus Sicherheitsgründen zweckmässig ebenfalls zwischen den beiden Kunststoff- oder Lackschichten (9 oder 10 gemäss Figur 3) angeordnet wird.

Eine besonders gute Anpassung des Streifens 7' in dem Bereich ausserhalb der variablen Flächenbereiche 12' lässt sich jedoch dann erzielen, wenn das Wertdokument od. dgl. in Form des Trägers 1 erst nach Aufbringen des das Sicherheitselement 6' bildenden Streifens 7' nachträglich bedruckt wird, wobei das Druckbild dann so zu legen ist, dass es zwar sowohl den Streifen als auch die Oberfläche 2' des Trägers 1' bedeckt, nicht jedoch die optisch variablen Flächenbereiche 12'. Das Druckbild sollte zweckmässig wenigstens einen der Ränder 8' übergreifen.

Aus vorstehender Erläuterung ergibt sich, dass es bei Verwendung von Sicherheitselementen gemäss der Erfindung möglich ist, Effekte zu erzielen, wie sie bisher nur erreichbar waren, wenn entsprechende optisch veränderliche Elemente nur räumlich begrenzt auf ein Substrat aufgebracht wurden. Trotzdem können sämtliche Vorteile der Streifen-Applikation von Transferfolien ausgenutzt werden, insbesondere die einfache Aufbringung der Sicherheitselemente bei entsprechend hohen Arbeitsgeschwindigkeiten in Verbindung mit besonders guter Haftung auf dem Substrat.

## Patentansprüche

1. Wertdokument mit einem Substrat (1, 1') und einem auf einer Oberfläche (2, 2') des Substrats (1,1') vollflächig befestigten Sicherheitselement (6, 6') in Form eines Streifens (7, 7') zur Echtheits- oder Qualitätssicherung des Substrats (1, 1 '), wobei der Streifen (7, 7') durch eine Übertragungslage einer Transferfolie, insbesondere einer Heißprägefolie, ausgebildet ist und sich von einem ersten Rand des Substrats (1, 1') über das Substrat (1, 1') hinweg bis zu einem zweiten Rand des Substrats (1, 1') erstreckt, wobei das Sicherheitselement (6, 6') wenigstens zwei Kunststoff- oder Lackschichten umfasst, zwischen denen mindestens eine, einen in Abhängigkeit vom Beleuchtungs- oder Betrachtungswinkel veränderlichen optischen Effekt erzeugende, optisch wirksame Schicht (13) und/oder Struktur (15) angeordnet ist, wobei die optisch wirksame Schicht (13) und/oder Struktur (15) nur in wenigstens zwei definiert begrenzten, voneinander beabstandeten, visuell veränderlichen Flächenbereichen (11, 12, 12`) angeordnet ist, und wobei der Streifen (7, 7') außerhalb der visuell veränderlichen Flächenbereiche (11, 12, 12') derart unauffällig gestaltet ist, dass er von einem Betrachter nicht oder kaum von der Oberfläche (2, 2') des Substrats (1, 1') unterschieden werden kann, wobei der Streifen (7, 7') außerhalb der visuell veränderlichen Flächenbereiche (11, 12, 12') nicht in Abhängigkeit vom Beleuchtungs- oder Betrachtungswinkel veränderlich ist und wobei der Streifen (7, 7') außerhalb der visuell veränderlichen Flächenbereiche (11, 12, 12') glasklar durchsichtig, matt oder an das Erscheinungsbild der Oberfläche (2, 2') des Substrats (1,1') angepasst ist.

2. Wertdokument nach Anspruch 1,
**dadurch gekennzeichnet,**
**dass** die optisch wirksame Schicht von einer bei Veränderung des Beleuchtungs- oder Betrachtungswinkels einen Farbwechsel erzeugenden Interferenz-Schichtfolge (13) gebildet ist.

3. Wertdokument nach Anspruch 2,
**dadurch gekennzeichnet,**
**dass** die Interferenz-Schichtfolge (13) wenigstens eine teiltransparente Absorptionsschicht sowie mindestens eine transparente dielektrische Abstandsschicht aufweist.

4. Wertdokument nach einem der vorhergehenden Ansprüche,
**dadurch gekennzeichnet,**
**dass** die Struktur eine beugungsoptisch wirksame Struktur (15), insbesondere eine Gitterstruktur ist.

5. Wertdokument nach einem der vorhergehenden Ansprüche,
**dadurch gekennzeichnet,**
**dass** die in Beobachtungsrichtung (14) vor der optisch wirksamen Schicht (13) oder Struktur (15) liegende Kunststoff- oder Lackschicht (9) transparent ist, während in Beobachtungsrichtung hinter der optisch wirksamen Schicht (13) oder Struktur (15) eine reflexionserhöhende Schicht angeordnet ist.

6. Wertdokument nach Anspruch 5,
**dadurch gekennzeichnet,**
**dass** die reflexionserhöhende Schicht eine reflektierende Metallschicht ist.

7. Wertdokument nach Anspruch 5,
**dadurch gekennzeichnet,**
**dass** die reflexionserhöhende Schicht eine transparente Kunststoff- oder Lackschicht ist, deren Brechungsindex sich deutlich, vorzugsweise um wenigstens 0,2, vom Brechungsindex der in Beobachtungsrichtung (14) davorliegenden Schicht unterscheidet.

8. Wertdokument nach einem der vorhergehenden Ansprüche,
**dadurch gekennzeichnet,**
**dass** der Streifen (7, 7') außerhalb der visuell veränderlichen Flächenbereiche (11, 12, 12') mit einer Musterung (18) versehen ist.

9. Wertdokument nach Anspruch 8,
**dadurch gekennzeichnet,**
**dass** die Musterung (18) des Streifens (7, 7') der Musterung (18) der den Streifen (7, 7') aufnehmenden Oberfläche (2') des Substrats (1') entspricht

10. Wertdokument nach Anspruch 8 oder 9,
**dadurch gekennzeichnet,**
**dass** die Musterung (18) ebenfalls zwischen den zwei Kunststoff- oder Lackschichten (9, 10) angeordnet ist.

11. Wertdokument nach einem der Ansprüche 8 bis 10,
**dadurch gekennzeichnet,**
**dass** die Musterung (18) gedruckt ist.

12. Wertdokument nach einem der Ansprüche 8 bis 11,
**dadurch gekennzeichnet,**
**dass** die Musterung (18) nach der Aufbringung des das Sicherheitselement (6') bildenden Streifens (7') auf das Substrat (2') aufgebracht ist.

13. Wertdokument nach Anspruch 8, 9, 11 oder 12,
**dadurch gekennzeichnet,**
**dass** die Musterung (18) gleichzeitig auf den Streifen (7') und die den Streifen (7') tragende Oberfläche (2') des Substrats (1') aufgebracht ist, wobei die Musterung (18) wenigstens einen Rand (8') des Streifens (7') übergreifend auf dem Streifen (7') und der Oberfläche (2') des Substrats (1') durchgehend gestaltet ist.

14. Wertdokument nach einem der vorhergehenden Ansprüche,
**dadurch gekennzeichnet,**
**dass** die visuell veränderlichen Flächenbereiche (11, 12) die Form eines einfachen geometrischen Elements, z.B. eines Vielecks, aufweisen.

15. Wertdokument nach einem der vorhergehenden Ansprüche,
**dadurch gekennzeichnet,**
**dass** zumindest zwei der visuell veränderlichen Flächenbereiche (11, 12, 12') unterschiedliche geometrische Form aufweisen.

16. Wertdokument nach einem der vorhergehenden Ansprüche,
**dadurch gekennzeichnet,**
**dass** wenigstens ein visuell veränderlicher Flächenbereich (12') die Form eines alphanumerischen Zeichens (V, A, L, I, D) aufweist.

17. Wertdokument nach Anspruch 15 oder 16,
**dadurch gekennzeichnet,**
**dass** mehrere visuell veränderliche Flächenbereiche (12') in Form alphanumerischer Zeichen vorgesehen sind, die gemeinsam einen Begriff (VALID) darstellen.

18. Wertdokument nach einem oder mehreren der Ansprüche 1 bis 17, wobei das Sicherheitselement (6, 6') derart aufgebracht ist, dass die visuell veränderlichen Flächenbereiche (11, 12, 12') und/oder die Musterung (18) mit Druck- oder sonstigen Gestaltungselementen (3, 4, 5) auf der Oberfläche (2, 2') des Substrats (1, 1') des Wertdokumentes im Register angeordnet sind.

19. Wertdokument nach einem der Ansprüche 1 bis 18
**dadurch gekennzeichnet,**
**dass** das Wertdokument als Banknote, Scheck, Aktie, Kreditkarte oder Ausweis ausgebildet ist.

## Claims

1. Valuable document with a substrate (1, 1') and a security element (6, 6') fixed over the entire area on a surface (2, 2') of the substrate (1, 1') in the form of a strip (7, 7') for authenticity or quality assurance of the substrate (1, 1'), wherein the strip (7, 7') is formed by a transfer layer of a transfer film, in particular of a hot embossing film, and extends from a first edge of the substrate (1, 1') across the substrate (1, 1') to a second edge of the substrate (1, 1'), the security element (6, 6') comprising at least two plastic or lacquer layers between which at least one optically active layer (13) and/or structure (15) is arranged, which produces an optical effect which varies as a function of the illumination or observation angle, with the optically active layer (13) and/or structure (15),being arranged only in at least two spaced-apart, visually variable surface regions (11, 12, 12') which are delimited in a defined manner and the strip (7, 7') outside the visually variable surface regions (11, 12, 12') being designed unobtrusively such that an observer cannot or can hardly distinguish it from the surface (2, 2') of the substrate (1, 1'), with the strip (7, 7') outside the visually variable surface regions (11, 12, 12') not being variable as a function of the illumination or observation angle and the strip (7, 7') outside the visually variable surface regions (11, 12, 12') being glass-clear transparent, matt or matched to the appearance of the surface (2, 2') of the substrate (1, 1').

2. Valuable document according to Claim 1, **characterized in that** the optically active layer is formed by an interference layer sequence (13) which produces a colour change when the illumination or observation angle changes.

3. Valuable document according to Claim 2, **characterized in that** the interference layer sequence (13) has at least one partially transparent absorption layer and at least one transparent dielectric spacer layer.

4. Valuable document according to one of the preceding claims, **characterized in that** the structure is a structure (15) which is active in terms of optical diffraction, in particular a grating structure.

5. Valuable document according to one of the preceding claims, **characterized in that** the plastic or lacquer layer (9) which lies upstream of the optically active layer (13) or structure (15) in the observation direction (14) is transparent, whereas a reflection-increasing layer is arranged downstream of the optically active layer (13) or structure (15) in the observation direction.

6. Valuable document according to Claim 5, **characterized in that** the reflection-increasing layer is a reflective metal layer.

7. Valuable document according to Claim 5, **characterized in that** the reflection-increasing layer is a transparent plastic or lacquer layer whose refractive index differs clearly, for example by at least 0.2, from the refractive index of the layer which lies upstream thereof in the observation direction (14).

8. Valuable document according to one of the preceding claims, **characterized in that** the strip (7, 7') outside the visually variable surface regions (11, 12, 12') is provided with a pattern (18).

9. Valuable document according to Claim 8, **characterized in that** the pattern (18) of the strip (7, 7') corresponds to the pattern (18) of that surface (2') of the substrate (1') which receives the strip (7, 7').

10. Valuable document according to Claim 8 or 9, **characterized in that** the pattern (18) is likewise arranged between the two plastic or lacquer layers (9, 10).

11. Valuable document according to one of Claims 8 to 10, **characterized in that** the pattern (18) is printed.

12. Valuable document according to one of Claims 8 to 11, **characterized in that** the pattern (18) is applied onto the substrate (2') after the strip (7') forming the security element (6') has been applied.

13. Valuable document according to Claim 8, 9, 11 or 12, **characterized in that** the pattern (18) is applied simultaneously onto the strip (7') and that surface (2') of the substrate (1') which carries the strip (7'), with the pattern (18) having a design which is continuous on the strip (7') and the surface (2') of the substrate (1') such that it overlaps at least one edge (8') of the strip (7').

14. Valuable document according to one of the preceding claims, **characterized in that** the visually variable surface regions (11, 12) are shaped like a simple geometric element, e.g. a polygon.

15. Valuable document according to one of the preceding claims, **characterized in that** at least two of the visually variable surface regions (11, 12, 12') have different geometrical shapes.

16. Valuable document according to one of the preceding claims, **characterized in that** at least one visually variable surface region (12') is shaped like an alphanumeric character (V, A, L, I, D).

17. Valuable document according to Claim 15 or 16, **characterized in that** a plurality of visually variable surface regions (12') shaped like alphanumeric characters are provided which together represent a term (VALID).

18. Valuable document according to one or more of Claims 1 to 17, wherein the security element (6, 6') is applied such that the visually variable surface regions (11, 12, 12') and/or the pattern (18) are arranged in register with printing or other design elements (3, 4, 5) on the surface (2, 2') of the substrate (1, 1') of the valuable document.

19. Valuable document according to one of Claims 1 to 18, **characterized in that** the valuable document is designed as a banknote, cheque, share certificate, credit card or identity card.

## Revendications

1. Document de valeur avec un substrat (1, 1') et un élément de sécurité (6, 6') en forme de bande (7, 7') fixé intégralement sur une surface (2, 2') du substrat (1, 1') et permettant d'assurer l'authenticité et la qualité du substrat (1, 1'), la bande (7, 7') étant réalisée par une couche de transmission d'une feuille de transfert, en particulier d'un film estampé à chaud, et s'étendant d'un premier bord du substrat (1, 1') jusqu'à un deuxième bord du substrat (1, 1') en passant par-dessus le substrat (1, 1'), l'élément de sécurité (6, 6') comprenant au moins deux couches de plastique ou de peinture, entre lesquelles est disposée au moins une couche (13) et/ou structure (15) à fonction optique générant un effet optique changeant en fonction de l'angle d'éclairage ou d'observation, la couche (13) et/ou structure (15) à fonction optique n'étant disposée que dans au moins deux régions de surface changeant visuellement (11, 12, 12') limitées de façon définie et distantes l'une de l'autre, et la bande (7, 7') en dehors des régions de surface changeant visuellement (11, 12, 12') étant conçue de façon si peu distincte qu'elle ne peut pas ou à peine être différenciée de la surface (2, 2') du substrat (1, 1') par un observateur, la bande (7, 7') en dehors des régions de surface changeant visuellement (11, 12, 12') n'étant pas changeante en fonction de l'angle d'éclairage ou d'observation et la bande (7, 7') en dehors des régions de surface changeant visuellement (11, 12, 12') étant mate transparente ou adaptée à l'apparence de la surface (2, 2') du substrat (1, 1'),

2. Document de valeur selon la revendication 1,
**caractérisé en ce**
**que** la couche à fonction optique est formée par une suite de couches d'interférence (13) générant un changement de couleur en cas de modification de l'angle d'éclairage ou d'observation.

3. Document de valeur selon la revendication 2,
**caractérisé en ce**
**que** la suite de couches d'interférence (13) présente au moins une couche d'absorption partiellement transparente ainsi qu'au moins une couche d'espacement diélectrique transparente.

4. Document de valeur selon l'une quelconque des revendications précédentes,
**caractérisé en ce**
**que** la structure est une structure (15) à effet de diffraction, en particulier une structure de réseau.

5. Document de valeur selon l'une quelconque des revendications précédentes,
**caractérisé en ce**
**que** la couche de plastique ou de peinture (9) située devant la couche (13) ou structure (15) à fonction optique dans le sens d'observation (14) est transparente, tandis qu'une couche augmentant la réflexion est disposée derrière la couche (13) ou structure (15) à fonction optique dans le sens d'observation.

6. Document de valeur selon la revendication 5,
**caractérisé en ce**
**que** la couche augmentant la réflexion est une couche métallique réfléchissante.

7. Document de valeur selon la revendication 5,
**caractérisé en ce**
**que** la couche augmentant la réflexion est une couche de plastique ou de peinture transparente dont l'indice de réfraction se distingue sensiblement, de préférence d'au moins 0,2, de l'indice de réfraction de la couche située devant dans le sens d'observation (14).

8. Document de valeur selon l'une quelconque des revendications précédentes,
**caractérisé en ce**
**que** la bande (7, 7') en dehors des régions de surface changeant visuellement (11, 12, 12') est dotée d'un motif (18).

9. Document de valeur selon la revendication 8,
**caractérisé en ce**
**que** le motif (18) de la bande (7, 7') correspond au motif (18) de la surface (2') du substrat (1') accueillant la bande (7, 7').

10. Document de valeur la revendication 8 ou 9,
**caractérisé en ce**
**que** le motif (18) est également disposé entre les deux couches de plastique ou de peinture (9, 10).

11. Document de valeur selon l'une quelconque des revendications 8 à 10,
**caractérisé en ce**
**que** le motif (18) est imprimé.

12. Document de valeur selon l'une quelconque des revendications 8 à 11,
**caractérisé en ce**
**que** le motif (18) est apposé sur le substrat (2') après l'application de la bande (7') formant l'élément de sécurité (6').

13. Document de valeur selon la revendication 8, 9, 11 ou 12,
**caractérisé en ce**
**que** le motif (18) est apposé en même temps sur la bande (7') et sur la surface (2') du substrat (1') portant la bande (7'), le motif (18) traversant toute la bande (7') et la surface (2') du substrat (1') en s'étendant sur au moins un bord (8') de la bande (7').

14. Document de valeur selon l'une quelconque des revendications précédentes,
**caractérisé en ce**
**que** les régions de surface changeant visuellement (11, 12) présentent la forme d'un élément géométrique simple, par exemple d'un polygone.

15. Document de valeur selon l'une quelconque des revendications précédentes,
**caractérisé en ce**
**qu'**au moins deux des régions de surface changeant visuellement (11, 12, 12') présentent une forme géométrique différente.

16. Document de valeur selon l'une quelconque des revendications précédentes,
**caractérisé en ce**
**qu'**au moins une région de surface changeant visuellement (12') présente la forme d'un caractère alphanumérique (V, A, L, I, D).

17. Document de valeur selon la revendication 15 ou 16,
**caractérisé en ce**
**que** plusieurs régions de surface changeant visuellement (12') sont prévues en forme de caractères alphanumériques, lesquels caractères forment ensemble un terme (VALID).

18. Document de valeur selon l'une quelconque des revendications 1 à 17, l'élément de sécurité (6, 6') étant apposé de telle façon que les régions de surface changeant visuellement (11, 12, 12') et/ou le motif (18) avec des éléments d'impression ou autres éléments de conception (3, 4, 5) sont disposés en repérage sur la surface (2, 2') du substrat (1, 1') du document de valeur.

19. Document de valeur selon l'une quelconque des revendications 1 à 18,
**caractérisé en ce**
**que** le document de valeur est réalisé comme un billet de banque, un chèque, une action, une carte de crédit ou une carte d'identité.
